# EUROPEAN PATENT APPLICATION

(11) **EP 4 790 242 A1**
(43) Date of publication of application: **12.08.2026**
(21) Application number: 26152953.1
(22) Date of filing: 20.01.2026
(51) Int. Cl.: F01D 25/00, F01D 25/28

(54) **CLEANING TOOL FOR GAS TURBINE ENGINE AND METHOD FOR MAINTAINING GAS TURBINE ENGINE**

(30) Priority: 11.02.2025 GB 202501980
(71) Applicant: Rolls-Royce plc, London N1 9FX (GB)
(72) Inventor: Ishaan, Mohammed, Derby, DE24 8BJ (GB); Genlloud, James, Derby, DE24 8BJ (GB); Clark, Romily, Derby, DE24 8BJ (GB); Diamantopoulos, Georgios, Derby, DE24 8BJ (GB)
(74) Representative: Rolls-Royce plc

(57) **Abstract**

A cleaning tool (100) for cleaning a component (50) located within a gas turbine engine (10) is disclosed. The cleaning tool (100) includes a tubular body (102) including: a first open end (104) and a second closed end (106); an engagement portion (108) that is proximal to the second closed end (106) and configured to engage with a support (110) within the gas turbine engine (10); a nozzle aperture (112) disposed between the first open end (104) and the engagement portion (108); and a flow channel (114) extending from the first open end (104) and in fluid communication with the nozzle aperture (112). The flow channel (114) is configured to transport a cleaning fluid (115) from the first open end (104) to the nozzle aperture (112). The cleaning fluid (115) is delivered to the component (50) through the nozzle aperture (112). The tubular body (102) is configured to be inserted through a first port (116) of the gas turbine engine (10) from the second closed end (106), such that the engagement portion (108) engages with the support (110).

## Description

### CROSS REFERENCE TO RELATED APPLICATIONS

This represents the first application directed towards the subject-matter.

### FIELD

This disclosure relates to a cleaning tool for cleaning a component located within a gas turbine engine and a method for maintaining a gas turbine engine.

### BACKGROUND

During operation of a gas turbine engine, environmental contaminants (e.g., sand) may accumulate on surfaces of various components located within the gas turbine engine. Such accumulation of contaminants may reduce an operational efficiency of the gas turbine engine. Therefore, the gas turbine engine may need to be cleaned during its operational life. For such cleaning operations, the gas turbine engine may need to be removed from a wing of an aircraft. For example, the gas turbine engine may need to be taken off-wing for cleaning sandy nozzle guide vanes (NGVs) to restore the NGVs to a serviceable condition. Removing the gas turbine engine off-wing for cleaning may be costly and increase a downtime of the gas turbine engine.

Some gas turbine engines are provided with cleaning fluid supply devices that are permanently fixed within the engine e.g. CN110064615 and US2017369174. These supply fluid at low pressures and flow rates but are secured to withstand the airflow through the engine as the engine cycles through take off, cruise and landing.

### SUMMARY

In a first aspect, there is provided a cleaning tool for cleaning a component located within a gas turbine engine. The cleaning tool includes a tubular body. The tubular body includes a first open end and a second closed end. The tubular body further includes an engagement portion that is proximal to the second closed end. The engagement portion is configured to engage with a support within the gas turbine engine. The tubular body further includes at least one nozzle aperture disposed between the first open end and the engagement portion. The tubular body further includes a flow channel extending from the first open end and in fluid communication with the at least one nozzle aperture. The flow channel is configured to transport a cleaning fluid from the first open end to the at least one nozzle aperture. Upon engagement of the engagement portion with the support, the at least one nozzle aperture is configured to face the component so as to deliver the cleaning fluid to the component therethrough. The tubular body is configured to be inserted and removed through a first port of the gas turbine engine from the second closed end, such that the engagement portion engages with the support.

The cleaning tool may facilitate cleaning the component of the gas turbine engine without taking the gas turbine engine from a wing of an aircraft. The cleaning tool may allow cleaning the component while the gas turbine engine is mounted to the wing of the aircraft. The cleaning tool may thus reduce the costs associated with cleaning the component (e.g., mitigate costs associated with taking the gas turbine engine from the wing), as well as reduce the downtime of the gas turbine engine. The cleaning tool may be removed from the gas turbine engine after a cleaning operation has been completed

The geometric constraints on the tubular body that allow the tubular body to be inserted through the first port may limit the rigidity offered by the tubular body alone, without external support. The engagement portion of the tubular body engaging with the support may allow delivery of the cleaning fluid to the component at high pressures and velocities through the at least one nozzle aperture. The tubular body may resist deformation (e.g., bending) due to engagement of the engagement portion with the support. This may also improve an accuracy of directing the cleaning fluid to the component at a high exit velocity through the at least one nozzle aperture, and reduce the likelihood of damaging other components (e.g., thermal barrier or other coatings) proximal to the component during cleaning operation.

In an embodiment, the flow channel has a maximum diameter between 4 millimetres and 6 millimetres.

In an embodiment, the tubular body further includes a curved portion extending partially from the second closed end towards the first open end. The at least one nozzle aperture is disposed on the curved portion.

In an embodiment, the cleaning tool further includes a head plate at least partially defining the first open end of the tubular body. The head plate extends outwardly of the tubular body.

In an embodiment, the cleaning tool further includes a mounting plate configured to be removably coupled to the gas turbine engine. The tubular body is configured to be inserted through the first port of the gas turbine engine subsequent to removable coupling of the mounting plate to the gas turbine engine. The head plate is configured to be removably coupled to the mounting plate upon insertion of the tubular body through the first port of the gas turbine engine.

In an embodiment, the tubular body has a minimum wall thickness of greater than 1 millimetre and a maximum wall thickness of less than 5 millimetres along the flow channel.

In an embodiment, the tubular body has a minimum wall thickness of greater than 2 millimetres and a maximum wall thickness of less than 5 millimetres along the flow channel.

In an embodiment, the tubular body has a maximum outer diameter of less than 15 millimetres.

In an embodiment, the tubular body further includes a solid portion that is devoid of the flow channel. The engagement portion is disposed on the solid portion.

In an embodiment, the tubular body further includes a first recessed portion proximal to the second closed end of the tubular body. The cleaning tool further includes a first non-metallic member disposed around the first recessed portion. The first recessed portion may be provided by a local thinning of the wall of the tubular body.

In an embodiment, the tubular body further includes a second recessed portion proximal to the first open end of the tubular body. The cleaning tool further includes a second non-metallic member disposed around the second recessed portion. The second recessed portion may be provided by a local thinning of the wall of the tubular body.

In an embodiment, the flow channel and the at least one nozzle aperture are configured to deliver the cleaning fluid to the component at a flow rate of greater than 10 litres per minute through the at least one nozzle aperture.

In an embodiment, the exit velocity of the cleaning fluid delivered through the at least one nozzle aperture is greater than 150 metres per second.

In an embodiment, the flow channel is configured to receive the cleaning fluid at a pressure of greater than 200 bar.

In an embodiment, the at least one nozzle aperture is further configured to direct the cleaning fluid to a target cleaning area of the component.

In an embodiment, the cleaning tool further includes a nozzle removably connectable to the at least one nozzle aperture. The nozzle is configured to direct the cleaning fluid to a target cleaning area of the component.

In an embodiment, the support includes a second port of the gas turbine engine. The engagement portion at least partially extends through the second port.

In a second aspect, there is provided a gas turbine engine. The gas turbine engine includes an engine core. The gas turbine engine further includes a component located within the engine core. The gas turbine engine further includes a support within the engine core. The gas turbine engine further includes a first port that provides access to the component. The gas turbine engine further includes a cleaning tool for cleaning the component. The cleaning tool includes a tubular body. The tubular body includes a first open end and a second closed end. The tubular body further includes an engagement portion that is proximal to the second closed end. The engagement portion is configured to engage with the support. The tubular body further includes at least one nozzle aperture disposed between the first open end and the engagement portion. The tubular body further includes a flow channel extending from the first open end and in fluid communication with the at least one nozzle aperture. The flow channel is configured to transport a cleaning fluid from the first open end to the at least one nozzle aperture. Upon engagement of the engagement portion with the support, the at least one nozzle aperture is configured to face the component so as to deliver the cleaning fluid to the component therethrough. The tubular body is configured to be inserted through the first port from the second closed end, such that the engagement portion engages with the support.

The cleaning tool may facilitate cleaning the component of the gas turbine engine without taking the gas turbine engine from a wing of an aircraft. The cleaning tool may allow cleaning the component while the gas turbine engine is mounted to the wing of the aircraft. The cleaning tool may thus reduce the costs associated with cleaning the component (e.g., mitigate costs associated with taking the gas turbine engine from the wing), as well as reduce the downtime of the gas turbine engine.

The geometric constraints on the tubular body that allow the tubular body to be inserted through the first port may limit the rigidity offered by the tubular body alone, without external support. The engagement portion of the tubular body engaging with the support may allow delivery of the cleaning fluid to the component at high pressures and velocities through the at least one nozzle aperture. The tubular body may resist deformation (e.g., bending) due to engagement of the engagement portion with the support. This may also improve an accuracy of directing the cleaning fluid to the component at a high exit velocity through the at least one nozzle aperture, and reduce the likelihood of damaging other components (e.g., thermal barrier or other coatings) proximal to the component during cleaning operation.

In a third aspect, there is provided a method for maintaining a gas turbine engine. The method includes providing a cleaning tool. The cleaning tool includes a tubular body. The tubular body includes a first open end and a second closed end. The tubular body further includes an engagement portion that is proximal to the second closed end. The engagement portion is configured to engage with a support within the gas turbine engine. The tubular body further includes at least one nozzle aperture disposed between the first open end and the engagement portion. The tubular body further includes a flow channel extending from the first open end and in fluid communication with the at least one nozzle aperture. The flow channel is configured to transport a cleaning fluid from the first open end to the at least one nozzle aperture. Upon engagement of the engagement portion with the support, the at least one nozzle aperture is configured to face a component located within the gas turbine engine so as to deliver the cleaning fluid to the component therethrough. The method further includes inserting the tubular body through a first port of the gas turbine engine from the second closed end, such that the engagement portion engages with the support. The method further includes supplying the cleaning fluid to the flow channel, such that the cleaning fluid is delivered to the component through the at least one nozzle aperture. The method further includes removing the tubular body through the first port.

The method may be used to facilitate cleaning the component of the gas turbine engine using the cleaning tool without taking the gas turbine engine from a wing of an aircraft. Using the method, the cleaning tool may be used to clean the component while the gas turbine engine is mounted to the wing of the aircraft. The method may thus reduce the costs associated with cleaning the component (e.g., mitigate costs associated with taking the gas turbine engine from the wing), as well as reduce the downtime of the gas turbine engine.

The geometric constraints on the tubular body that allow the tubular body to be inserted through the first port may limit the rigidity offered by the tubular body alone, without external support. The engagement portion of the tubular body engaging with the support may allow delivery of the cleaning fluid to the component at high pressures and velocities through the at least one nozzle aperture. The tubular body may resist deformation (e.g., bending) due to engagement of the engagement portion with the support. This may also improve an accuracy of directing the cleaning fluid to the component at a high exit velocity through the at least one nozzle aperture, and reduce the likelihood of damaging other components (e.g., thermal barrier or other coatings) proximal to the component during cleaning operation.

In an embodiment, the method further includes removably coupling a mounting plate to the gas turbine engine. The method further includes removably coupling a head plate of the cleaning tool to the mounting plate upon insertion of the tubular body through the first port of the gas turbine engine.

In an embodiment, the step of supplying the cleaning fluid to the flow channel includes delivering, through the at least one nozzle aperture, the cleaning fluid to the component at a flow rate of greater than 10 litres per minute.

In an embodiment, the exit velocity of the cleaning fluid delivered through the at least one nozzle aperture is greater than 150 metres per second.

In an embodiment, the step of supplying the cleaning fluid to the flow channel further includes supplying the cleaning fluid to the flow channel at a pressure of greater than 200 bar.

In an embodiment, the step of supplying the cleaning fluid to the flow channel further includes directing, via the at least one nozzle aperture, the cleaning fluid to a target cleaning area of the component.

In an embodiment, the method further includes removably connecting a nozzle to the at least one nozzle aperture. The step of supplying the cleaning fluid to the flow channel further includes directing, via the nozzle, the cleaning fluid to a target cleaning area of the component.

In an embodiment, the step of inserting the tubular body through the first port further includes at least partially receiving the engagement portion of the tubular body through a second port of the gas turbine engine, such that the engagement portion at least partially extends through the second port.

In an embodiment, the method further includes inspecting the gas turbine engine to identify the component.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core. The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, in which:
FIG. 1 is a sectional side view of a gas turbine engine;
FIG. 2 is a diagram showing a portion of the gas turbine engine including a cleaning tool, in accordance with an embodiment of the present disclosure;
FIG. 3A is a diagram of the cleaning tool, in accordance with an embodiment of the present disclosure;
FIG. 3B is another diagram of the cleaning tool, in accordance with an embodiment of the present disclosure;
FIG. 4 is a top view of a mounting plate of the cleaning tool in isolation, in accordance with an embodiment of the present disclosure; and
FIG. 5 is a flowchart depicting various steps of a method for maintaining a gas turbine engine, in accordance with an embodiment of the present disclosure.

### DETAILED DESCRIPTION

Aspects and embodiments of the present disclosure will now be discussed with reference to the accompanying figures. Further aspects and embodiments will be apparent to those skilled in the art.

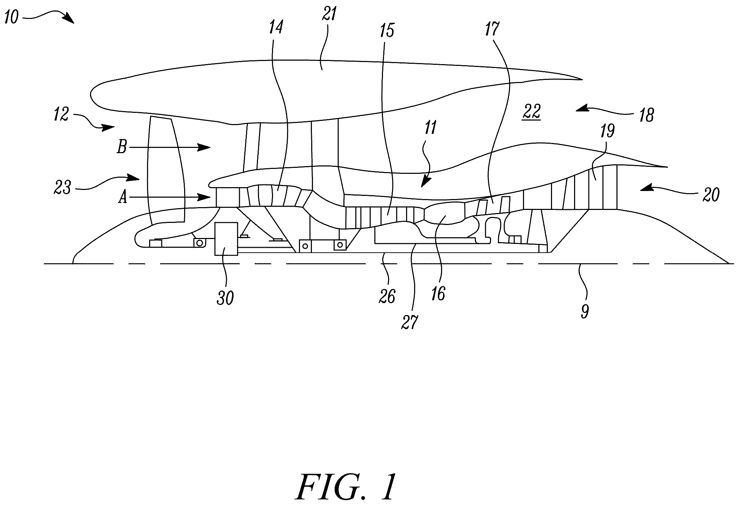

FIG. 1 illustrates a gas turbine engine 10 having a principal rotational axis 9. The engine 10 includes an air intake 12 and a propulsive fan 23 that generates two airflows: a core airflow A and a bypass airflow B. The gas turbine engine 10 includes a core 11 that receives the core airflow A. The engine core 11 includes, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30. The combustion equipment 16 may be interchangeably referred to as "the combustor 16."

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor", as used herein, may be taken to mean the lowest pressure turbine stages and lowest pressure compressor stages (i.e., not including the fan 23), respectively, and/or the turbine and compressor stages that are connected together by the interconnecting shaft 26 with the lowest rotational speed in the engine 10 (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine 10 shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle), or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial, and circumferential directions are mutually perpendicular.

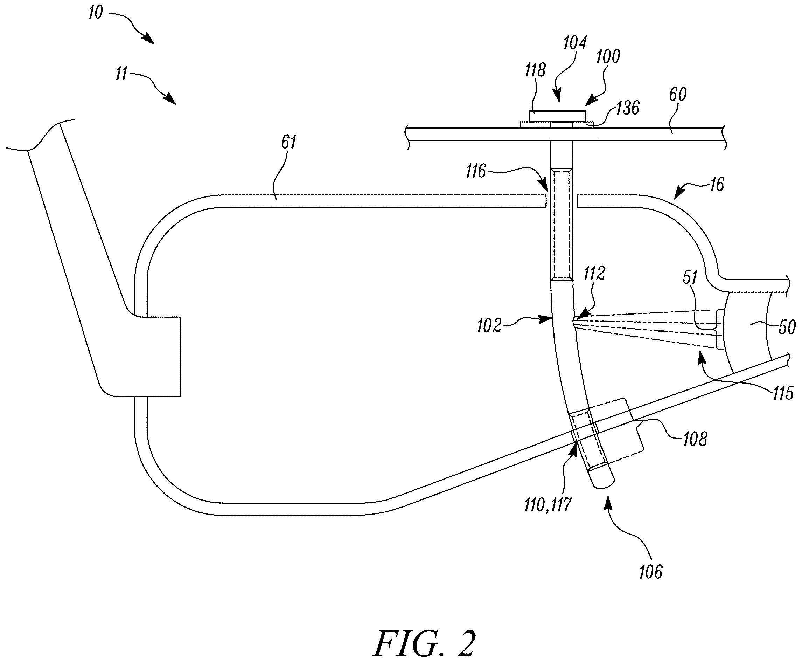

FIG. 2 shows a portion of the gas turbine engine 10 within the engine core 11, in accordance with an embodiment of the present disclosure. Specifically, FIG. 2 shows a portion of the combustor 16 of the gas turbine engine 10.

Referring to FIGS. 1 and 2, the gas turbine engine 10 further includes a component 50 located within the engine core 11. The component 50 may be any component positioned within the engine core 11 on which contaminants (such as, dust, sand, etc.) may accumulate due to operation of the gas turbine engine 10. The component 50 may include, for example, an aerofoil (e.g., rotor blades, stator vanes, guide vanes, and so forth). In some embodiments, the component 50 may be a nozzle guide vane (NGV).

The gas turbine engine 10 further includes a first port 116 that provides access to the component 50. The first port 116 may include, for example, a borescope port or a dilution port. The gas turbine engine 10 further includes a support 110. The support 110 may be located within the engine core 11. Further, the support 110 may be located proximal to the component 50. The support 110 may include a component, a port, or any suitable structure of the gas turbine engine 10 which has adequate structural integrity and is positioned within the engine core 11. In an embodiment, the support 110 may include a second port 117 of the gas turbine engine 10. The second port 117 may be different from the first port 116. The second port 117 may include, for example, a borescope port or a dilution port.

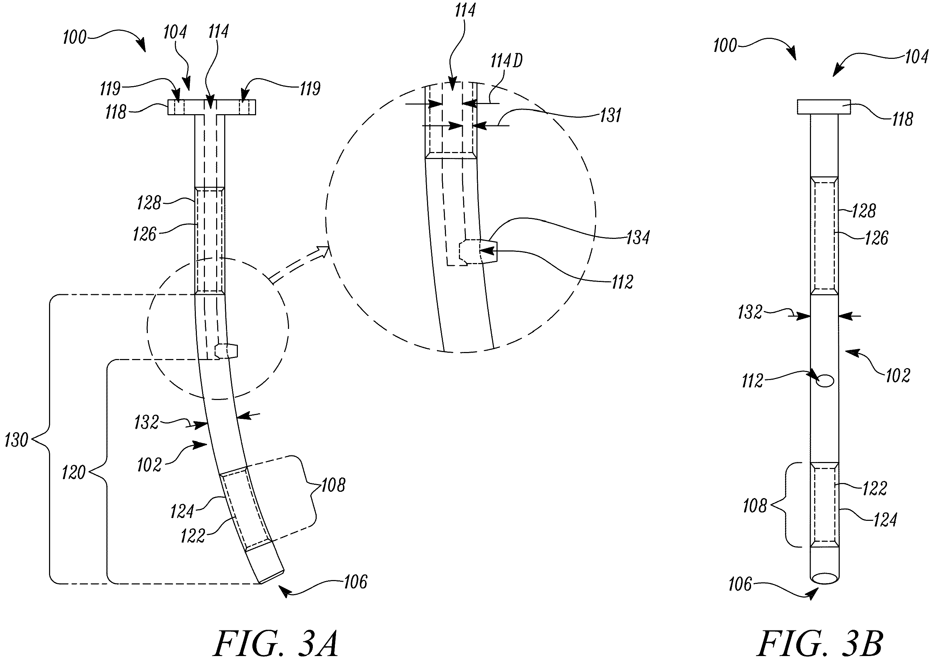

The gas turbine engine 10 further includes a cleaning tool 100 for cleaning the component 50 located within the gas turbine engine 10. The cleaning tool 100 is also shown in FIGS. 3A and 3B.

Referring to FIGS. 2, 3A, and 3B, the cleaning tool 100 includes a tubular body 102. The tubular body 102 includes a first open end 104 and a second closed end 106. The second closed end 106 may be distal to the first open end 104. The tubular body 102 may extend between the first open end 104 and the second closed end 106. The tubular body 102 may have a circular or a non-circular cross-section. In some embodiments, the tubular body 102 may be substantially cylindrical. The tubular body 102 may be made from any suitable rigid material, such as a metal (e.g., stainless steel).

The tubular body 102 further includes an engagement portion 108 that is proximal to the second closed end 106. In some embodiments, the engagement portion 108 may partially extend from the second closed end 106 towards first open end 104. Alternatively, as shown in FIG. 2, the engagement portion 108 may be spaced apart from (but proximal to) the second closed end 106 and partially extend towards the first open end 104.

The engagement portion 108 is configured to engage with the support 110 within the gas turbine engine 10. The engagement portion 108 may engage with the support 110 in any suitable manner, such that the engagement portion 108 is structurally supported by the support 110. In the illustrated embodiment of FIG. 2, the engagement portion 108 at least partially extends through the second port 117.

The tubular body 102 further includes at least one nozzle aperture 112 disposed between the first open end 104 and the engagement portion 108. The tubular body 102 further includes a flow channel 114 (shown in FIG. 3A) extending from the first open end 104 and in fluid communication with the at least one nozzle aperture 112. The flow channel 114 is configured to transport a cleaning fluid 115 from the first open end 104 to the at least one nozzle aperture 112.

The cleaning fluid 115 may include any suitable fluid for cleaning the component 50. As an example, the cleaning fluid 115 may include water, or a combination of water and detergent, soap, and/or other additives (e.g., abrasive media, such as sodium bicarbonate). The composition of the cleaning fluid 115 may be selected such that the cleaning fluid 115 does not damage metal portion(s) and/or a thermal barrier coating (TBC) of the component 50 or other components proximal to the component 50. Any suitable technique may be implemented for supplying or providing the cleaning fluid 115 to the flow channel 114. For example, a pump (not shown) may be used to provide the flow channel 114 with the cleaning fluid 115 at a desired pressure from a storage container (not shown).

Upon engagement of the engagement portion 108 with the support 110, the at least one nozzle aperture 112 is configured to face the component 50 so as to deliver the cleaning fluid 115 to the component 50 therethrough. In an embodiment, the at least one nozzle aperture 112 may be further configured to direct the cleaning fluid 115 to a target cleaning area 51 of the component 50. Specifically, in some embodiments, upon engagement of the engagement portion 108 with the support 110, the at least one nozzle aperture 112 may direct the cleaning fluid 115 to the target cleaning area 51 of the component 50.

The tubular body 102 is configured to be inserted through the first port 116 of the gas turbine engine 10 from the second closed end 106, such that the engagement portion 108 engages with the support 110. As discussed above, in the illustrated embodiment of FIG. 2, the engagement portion 108 at least partially extends through the second port 117.

The cleaning tool 100 may facilitate cleaning the component 50 of the gas turbine engine 10 without taking the gas turbine engine 10 from a wing of an aircraft. The cleaning tool 100 may allow cleaning the component 50 while the gas turbine engine 10 is mounted to the wing of the aircraft. The cleaning tool 100 may thus reduce the costs associated with cleaning the component 50 (e.g., mitigate costs associated with taking the gas turbine engine from the wing), as well as reduce the downtime of the gas turbine engine 10.

The geometric constraints on the tubular body 102 that allow the tubular body 102 to be inserted through the first port 116 may limit the rigidity offered by the tubular body 102 alone, without external support. The engagement portion 108 of the tubular body 102 engaging with the support 110 may allow delivery of the cleaning fluid 115 to the component 50 at high pressures and velocities through the at least one nozzle aperture 112. The tubular body 102 may resist deformation (e.g., bending) due to engagement of the engagement portion 108 with the support 110. This may also improve an accuracy of directing the cleaning fluid 115 to the component 50 at a high exit velocity through the at least one nozzle aperture 112, and reduce the likelihood of damaging other components (e.g., thermal barrier or other coatings) proximal to the component 50 during cleaning operation.

In an embodiment, the tubular body 102 may further include a solid portion 120 that is devoid of the flow channel 114. The engagement portion 108 may be disposed on the solid portion 120. The solid portion 120 may provide additional rigidity to the tubular body 102. Further, the tubular body 102 may include a curved portion 130 extending partially from the second closed end 106 towards the first open end 104. The at least one nozzle aperture 112 may be disposed on the curved portion 130. The curved portion 130 may include the at least one nozzle aperture 112, a portion the flow channel 114, and a portion of the solid portion 120. The curved portion 130 may, in some cases, allow the tubular body 102 to be inserted through the first port 116, such that the engagement portion 108 at least partially extends through the second port 117. However, it may be noted that the design of the tubular body 102 may vary depending on relative positioning of the first port 116 and the support 110 (e.g., the second port 117).

The tubular body 102 has a maximum outer diameter 132. The maximum outer diameter 132 may be less than a diameter of the first port 116, such that the tubular body 102 can be inserted through the first port 116. In some embodiments, the maximum outer diameter 132 may be less than a diameter of the second port 117, such that the engagement portion 108 at least partially extends through the second port 117. In some embodiments, the maximum outer diameter 132 of the tubular body 102 may be less than 15 millimetres. In some embodiments, the maximum outer diameter 132 may be less than 13 millimetres. In some embodiments, the maximum outer diameter 132 may be about 12 millimetres.

In an embodiment, the flow channel 114 may have a maximum diameter 114D between 4 millimetres and 6 millimetres. In some embodiments, the flow channel 114 may have a maximum diameter 114D of 5 millimetres. Furthermore, the tubular body 102 may define a wall thickness 131 along the flow channel 114. The wall thickness 131 may vary or be constant along the flow channel 114. In an embodiment, the tubular body 102 may have a minimum wall thickness of greater than 1 millimetre and a maximum wall thickness of less than 5 millimetres along the flow channel 114. The minimum wall thickness may be greater than 2 millimetres.

In an embodiment, the flow channel 114 may be configured to receive the cleaning fluid 115 at a pressure of greater than 200 bar. In some embodiments, the flow channel 114 may be configured to receive the cleaning fluid 115 at a pressure of greater than 300 bar or greater than 350 bar. The engagement of the engagement portion 108 with the support 110 may allow the cleaning fluid 115 to be supplied at high pressures to the flow channel 114 of the tubular body 102.

In some embodiments, the flow channel 114 and the at least one nozzle aperture 112 may be configured to deliver the cleaning fluid 115 to the component 50 at a flow rate of greater than 10 litres per minute through the at least one nozzle aperture 112. In some embodiments, the flow channel 114 and the at least one nozzle aperture 112 may be configured to deliver the cleaning fluid 115 to the component 50 at a flow rate of greater than 20 litres per minute through the at least one nozzle aperture 112.

In some embodiments, the exit velocity of the cleaning fluid 115 delivered through the at least one nozzle aperture 112 may be greater than 150 metres per second. In some embodiments, the exit velocity of the cleaning fluid 115 delivered through the at least one nozzle aperture 112 may be greater than 250 meters per second.

It may be noted that the pressure, the flow rate, and the exit velocity of the cleaning fluid 115 may vary based on desired application attributes.

In some embodiments, the cleaning tool 100 may further include a head plate 118 at least partially defining the first open end 104 of the tubular body 102. The head plate 118 may extend outwardly of the tubular body 102. In some examples, the head plate 118 may extend radially outwardly of the tubular body 102. The head plate 118 may include a plurality of apertures 119 for connecting the cleaning tool 100 with other components (e.g., a mounting plate).

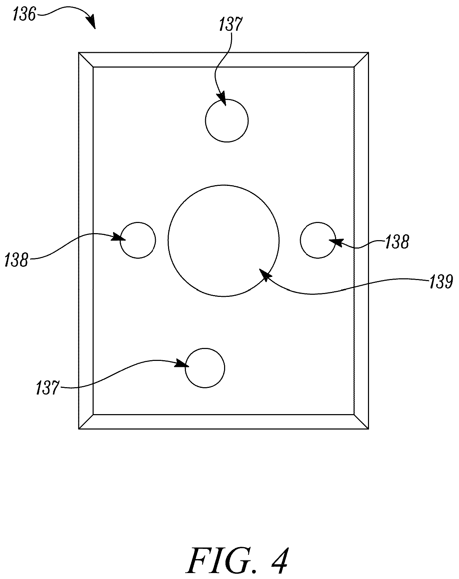

The cleaning tool 100 may further include a mounting plate 136 (shown in FIG. 1 and in isolation in FIG. 4) configured to be removably coupled to the gas turbine engine 10. For example, the mounting plate 136 may be configured to be removably coupled to a combustor casing 60 of the gas turbine engine 10.

Referring to FIGS. 1, 3A, and 4, the mounting plate 136 may include a plurality of first apertures 137 for removably mounting the mounting plate 136 to the gas turbine engine 10. The mounting plate 136 may be removably coupled to the gas turbine engine 10 via a plurality of coupling elements (e.g., fasteners) extending through the plurality of first apertures 137.

The mounting plate 136 may further include a plurality of second apertures 138. The plurality of second apertures 138 may correspond to the plurality of apertures 119 of the head plate 118. The mounting plate 136 may further include a main aperture 139. The tubular body 102 may be inserted through the main aperture 139 from the second closed end 106, such that the plurality of apertures 119 of the head plate 118 aligns with the plurality of second apertures 138. The head plate 118 may be removably coupled to mounting plate 136 using a plurality of coupling elements (e.g., fasteners) that extends through the plurality of apertures 119 of the head plate 118 and the plurality of second apertures 138 and the mounting plate 136.

The tubular body 102 may be configured to be inserted through the first port 116 of the gas turbine engine 10 subsequent to removable coupling of the mounting plate 136 to the gas turbine engine 10. The head plate 118 may be configured to be removably coupled to the mounting plate 136 upon insertion of the tubular body 102 through the first port 116 of the gas turbine engine 10.

In an embodiment, the tubular body 102 may further include a first recessed portion 122 proximal to the second closed end 106 of the tubular body 102. The cleaning tool 100 may further include a first non-metallic member 124 disposed around the first recessed portion 122. The first recessed portion 122 may have smaller diameter than the maximum outer diameter 132 of the tubular body 102. In some embodiments, the first recessed portion 122 may at least partially define the engagement portion 108.

In an embodiment, the tubular body 102 may further include a second recessed portion 126 proximal to the first open end 104 of the tubular body 102. The cleaning tool 100 may further include a second non-metallic member 128 disposed around the second recessed portion 126. The second recessed portion 126 may have smaller diameter than the maximum outer diameter 132 of the tubular body 102.

The first non-metallic member 124 and the second non-metallic member 128 may prevent direct contact of the tubular body 102 with components (which may be metallic, in some cases) of the gas turbine engine 10. For example, the first non-metallic member 124 may prevent direct contact between the first recessed portion 122 and the support 110. The second non-metallic member 128 may prevent direct contact between the second recessed portion 126 and a combustor liner 61. In some examples, each of the first non-metallic member 124 and the second non-metallic member 128 may be a nylon pad.

As discussed above, the wall thickness 131 may vary along the flow channel 114. The wall thickness 131 may be smaller in the second recessed portion 126 than other portions of the tubular body 102.

The cleaning tool 100 may further include a nozzle 134 (only shown in FIG. 3A for illustrative purposes) connected to the at least one nozzle aperture 112. The nozzle 134 may be configured to direct the cleaning fluid 115 to the target cleaning area 51 (shown in FIG. 2) of the component 50. In some embodiments, the nozzle 134 may be non-removably connected to the at least one nozzle aperture 112. In some other embodiments, the nozzle 134 may removably connectable to the at least one nozzle aperture 112.

The cleaning tool 100 may include any suitable means for connecting the nozzle 134 to the at least one nozzle aperture 112. For example, the tubular body 102 may include a threaded portion (not shown) located at the at least one nozzle aperture 112 to allow connection of various types of the nozzle 134 depending upon desired application attributes.

In some embodiments, the at least one nozzle aperture 112 may include a plurality of nozzle apertures 112. Each nozzle aperture 112 from the plurality of nozzle apertures 112 may be configured to deliver the cleaning fluid 115 to a corresponding component located within the gas turbine engine 10 (or more specifically, within the engine core 11). In this way, the cleaning tool 100 may be used to clean a plurality of components (e.g., a plurality of NGVs) located within the gas turbine engine 10. Alternatively, in some embodiments, a plurality of units of the cleaning tool 100 (with different designs) may be developed for a plurality of components (e.g., a plurality of NGVs). Based on the component desired to be cleaned, a corresponding unit from the plurality of units of the cleaning tool 100 may be selected and used.

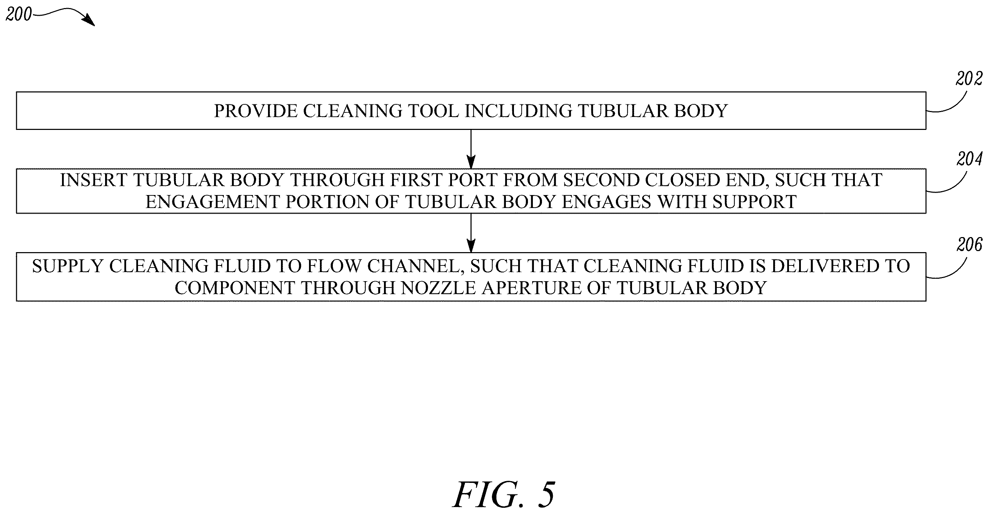

FIG. 5 shows a flowchart depicting various steps of a method 200 for maintaining a gas turbine engine (e.g., the gas turbine engine 10 of FIG. 1), in accordance with an embodiment of the present disclosure. The method 200 will be discussed with additional reference to FIGS. 2 to 4.

At step 202, the method 200 includes providing a cleaning tool. The cleaning tool includes a tubular body. The tubular body includes a first open end and a second closed end. The tubular body further includes an engagement portion that is proximal to the second closed end. The engagement portion is configured to engage with a support within the gas turbine engine. The tubular body further includes at least one nozzle aperture disposed between the first open end and the engagement portion. The tubular body further includes a flow channel extending from the first open end and in fluid communication with the at least one nozzle aperture. The flow channel is configured to transport a cleaning fluid from the first open end to the at least one nozzle aperture. Upon engagement of the engagement portion with the support, the at least one nozzle aperture is configured to face a component located within the gas turbine engine so as to deliver the cleaning fluid to the component therethrough. The method further includes inserting the tubular body through a first port of the gas turbine engine from the second closed end, such that the engagement portion engages with the support. The method further includes supplying the cleaning fluid to the flow channel, such that the cleaning fluid is delivered to the component through the at least one nozzle aperture. Referring to FIG. 2, for example, the method 200 may include providing the cleaning tool 100.

At step 204, the method 200 further includes inserting the tubular body through a first port of the gas turbine engine from the second closed end, such that the engagement portion engages with the support. Referring to FIG. 2, for example, the method 200 may include inserting the tubular body 102 through the first port 116 of the gas turbine engine 10 from the second closed end 106, such that the engagement portion 108 engages with the support 110.

In an embodiment, the step of inserting the tubular body through the first port may further include at least partially receiving the engagement portion of the tubular body through a second port of the gas turbine engine, such that the engagement portion at least partially extends through the second port. Referring to FIG. 2, for example, the method 200 may include at least partially receiving the engagement portion 108 of the tubular body 102 through the second port 117 of the gas turbine engine 10, such that the engagement portion 108 at least partially extends through the second port 117.

At step 206, the method 200 further includes supplying the cleaning fluid to the flow channel, such that the cleaning fluid is delivered to the component through the at least one nozzle aperture. Referring to FIG. 2, for example, the method 200 may include supplying the cleaning fluid 115 to the flow channel 114, such that the cleaning fluid 115 is delivered to the component 50 through the at least one nozzle aperture 112.

The method 200 may be used to facilitate cleaning the component of the gas turbine engine using the cleaning tool without taking the gas turbine engine from a wing of an aircraft. Using the method 200, the cleaning tool may be used to clean the component while the gas turbine engine is mounted to the wing of the aircraft. The method 200 may thus reduce the costs associated with cleaning the component (e.g., mitigate costs associated with taking the gas turbine engine from the wing), as well as reduce the downtime of the gas turbine engine.

The geometric constraints on the tubular body that allow the tubular body to be inserted through the first port may limit the rigidity offered by the tubular body alone, without external support. The engagement portion of the tubular body engaging with the support may allow delivery of the cleaning fluid to the component at high pressures and velocities through the at least one nozzle aperture. The tubular body may resist deformation (e.g., bending) due to engagement of the engagement portion with the support. This may also improve an accuracy of directing the cleaning fluid to the component at a high exit velocity through the at least one nozzle aperture, and reduce the likelihood of damaging other components (e.g., thermal barrier or other coatings) proximal to the component during cleaning operation.

In an embodiment, the step of supplying the cleaning fluid to the flow channel may include delivering, through the at least one nozzle aperture, the cleaning fluid to the component at a flow rate of greater than 10 litres per minute. Referring to FIG. 2, for example, the cleaning fluid 115 may be delivered to the component 50 through the at least one nozzle aperture 112 at a flow rate of greater than 10 litres per minute.

In an embodiment, the exit velocity of the cleaning fluid delivered through the at least one nozzle aperture may be greater than 150 metres per second.

In an embodiment, the step of supplying the cleaning fluid to the flow channel may include supplying the cleaning fluid to the flow channel at a pressure of greater than 200 bar. Referring to FIG. 2, for example, the cleaning fluid 115 may be supplied to the flow channel 114 at a pressure of greater than 200 bar.

In an embodiment, the step of supplying the cleaning fluid to the flow channel may further include directing, via the at least one nozzle aperture, the cleaning fluid to a target cleaning area of the component. Referring to FIG. 2, for example, the cleaning fluid 115 may be directed, via the at least one nozzle aperture 112, to the target cleaning area 51 of the component 50.

In an embodiment, the method 200 may further include removably connecting a nozzle to the at least one nozzle aperture. Referring to FIG. 3A, for example, the method 200 may include removably connecting the nozzle 134 to the at least one nozzle aperture 112.

In an embodiment, the step of supplying the cleaning fluid to the flow channel may further include directing the cleaning fluid via the nozzle to a target cleaning area of the component. Referring to FIGS. 2 and 3A, for example, the cleaning fluid 115 may be directed to the target cleaning area 51 of the component 50 via the nozzle 134.

In an embodiment, the method 200 may further include inspecting the gas turbine engine to identify the component. Referring to FIGS. 1 and 2, for example, the method 200 may include inspecting the gas turbine engine 10 to identify the component 50. In some examples, the method 200 may further include identifying the target cleaning area of the component.

In an embodiment, the method 200 may further include removably coupling a mounting plate to the gas turbine engine. The method 200 may further include removably coupling a head plate of the cleaning tool to the mounting plate upon insertion of the tubular body through the first port of the gas turbine engine. Referring to FIGS. 2, for example, the method 200 may include removably coupling the mounting plate 136 to the gas turbine engine 10 and removably coupling the head plate 118 to the mounting plate 136 upon insertion of the tubular body 102 through the first port 116 of the gas turbine engine 10.

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A cleaning tool (100) for cleaning a component (50) located within a gas turbine engine (10), the cleaning tool (100) comprising:
a tubular body (102) comprising:
a first open end (104) and a second closed end (106);
an engagement portion (108) that is proximal to the second closed end (106), wherein the engagement portion (108) is configured to engage with a support (110) within the gas turbine engine (10);
at least one nozzle aperture (112) disposed between the first open end (104) and the engagement portion (108); and
a flow channel (114) extending from the first open end (104) and in fluid communication with the at least one nozzle aperture (112), wherein the flow channel (114) is configured to transport a cleaning fluid (115) from the first open end (104) to the at least one nozzle aperture (112), and wherein, upon engagement of the engagement portion (108) with the support (110), the at least one nozzle aperture (112) is configured to face the component (50) so as to deliver the cleaning fluid (115) to the component (50) therethrough; and
wherein the tubular body (102) is configured to be inserted through a first port (116) of the gas turbine engine (10) from the second closed end (106), such that the engagement portion (108) engages with the support (110).

2. The cleaning tool (100) of claim 1 or claim 2, wherein the tubular body (102) further comprises a curved portion (130) extending partially from the second closed end (106) towards the first open end (104), and wherein the at least one nozzle aperture (112) is disposed on the curved portion (130).

3. The cleaning tool (100) of any one of the preceding claims, further comprising a head plate (118) at least partially defining the first open end (104) of the tubular body (102), and a mounting plate (136) configured to be removably coupled to the gas turbine engine (10), wherein the tubular body (102) is configured to be inserted through the first port (116) of the gas turbine engine (10) subsequent to removable coupling of the mounting plate (136) to the gas turbine engine (10), and wherein the head plate (118) extends outwardly of the tubular body (102) and is configured to be removably coupled to the mounting plate (136) upon insertion of the tubular body (102) through the first port (116) of the gas turbine engine (10).

4. The cleaning tool (100) of any one of the preceding claims, wherein the tubular body (102) has a maximum outer diameter (132) of less than 15 millimetres.

5. The cleaning tool (100) of any one of the preceding claims, wherein the tubular body (102) further comprises a solid portion (120) that is devoid of the flow channel (114), and wherein the engagement portion (108) is disposed on the solid portion (120).

6. The cleaning tool (100) of any one of the preceding claims, wherein the tubular body (102) further comprises a first recessed portion (122) proximal to the second closed end (106) of the tubular body (102), and wherein the cleaning tool (100) further comprises a first non-metallic member (124) disposed around the first recessed portion (122).

7. The cleaning tool (100) of any one of the preceding claims, wherein the tubular body (102) further comprises a second recessed portion (126) proximal to the first open end (104) of the tubular body (102), and wherein the cleaning tool (100) further comprises a second non-metallic member (128) disposed around the second recessed portion (126).

8. The cleaning tool (100) of any one of the preceding claims, wherein the flow channel (114) and the at least one nozzle aperture (112) are configured to deliver the cleaning fluid (115) to the component (50) at a flow rate of greater than 10 litres per minute through the at least one nozzle aperture (112).

9. The cleaning tool (100) of any one of the preceding claims, wherein the flow channel (114) is configured to receive the cleaning fluid (115) at a pressure of greater than 200 bar.

10. The cleaning tool (100) of any one of the preceding claims, wherein the support (110) comprises a second port (117) of the gas turbine engine (10), and wherein the engagement portion (108) at least partially extends through the second port (117).

11. A gas turbine engine (10) comprising:
an engine core (11);
a component (50) located within the engine core (11);
a support (110) within the engine core (11);
a first port (116) that provides access to the component (50); and
a cleaning tool (100) for cleaning the component (50), the cleaning tool (100) comprising:
a tubular body (102) comprising:
a first open end (104) and a second closed end (106);
an engagement portion (108) that is proximal to the second closed end (106), wherein the engagement portion (108) is configured to engage with the support (110);
at least one nozzle aperture (112) disposed between the first open end (104) and the engagement portion (108); and
a flow channel (114) extending from the first open end (104) and in fluid communication with the at least one nozzle aperture (112), wherein the flow channel (114) is configured to transport a cleaning fluid (115) from the first open end (104) to the at least one nozzle aperture (112), and wherein, upon engagement of the engagement portion (108) with the support (110), the at least one nozzle aperture (112) is configured to face the component (50) so as to deliver the cleaning fluid (115) to the component (50) therethrough; and
wherein the tubular body (102) is configured to be inserted through the first port (116) from the second closed end (106), such that the engagement portion (108) engages with the support (110).

12. A method (200) for maintaining a gas turbine engine (10), the method (200) comprising:
providing a cleaning tool (100) comprising:
a tubular body (102) comprising:
a first open end (104) and a second closed end (106);
an engagement portion (108) that is proximal to the second closed end (106), wherein the engagement portion (108) is configured to engage with a support (110) within the gas turbine engine (10);
at least one nozzle aperture (112) disposed between the first open end (104) and the engagement portion (108); and
a flow channel (114) extending from the first open end (104) and in fluid communication with the at least one nozzle aperture (112), wherein the flow channel (114) is configured to transport a cleaning fluid (115) from the first open end (104) to the at least one nozzle aperture (112), and wherein, upon engagement of the engagement portion (108) with the support (110), the at least one nozzle aperture (112) is configured to face a component (50) located within the gas turbine engine (10) so as to deliver the cleaning fluid (115) to the component (50) therethrough;
inserting the tubular body (102) through a first port (116) of the gas turbine engine (10) from the second closed end (106), such that the engagement portion (108) engages with the support (110); and
supplying the cleaning fluid (115) to the flow channel (114), such that the cleaning fluid (115) is delivered to the component (50) through the at least one nozzle aperture (112).

13. The method (200) of claim 12, further comprising:
removably coupling a mounting plate (136) to the gas turbine engine (10); and
removably coupling a head plate (118) of the cleaning tool (100) to the mounting plate (136) upon insertion of the tubular body (102) through the first port (116) of the gas turbine engine (10).

14. The method (200) of any one of claims 12 or 13, wherein the step of supplying the cleaning fluid (115) to the flow channel (114) comprises supplying the cleaning fluid (115) to the flow channel (114) at a pressure of greater than 200 bar.

15. The method (200) of any one of claims 12 to 14, wherein the step of inserting the tubular body (102) through the first port (116) further comprises at least partially receiving the engagement portion (108) of the tubular body (102) through a second port (117) of the gas turbine engine (10), such that the engagement portion (108) at least partially extends through the second port (117).
